# EUROPÄISCHE PATENTSCHRIFT

(11) **EP 2 069 187 B1**
(45) Veröffentlichungstag und Bekanntmachung des Hinweises auf die Patenterteilung: **01.02.2012**
(21) Anmeldenummer: 07786484.1
(22) Anmeldetag: 01.08.2007
(51) Int. Cl.: B62D 25/08, B62D 29/00, B60R 21/34

(54) **TRÄGERTEIL FÜR EIN FRONTENDMODUL EINES PERSONENKRAFTWAGENS**
SUPPORT PART FOR THE FRONT-END MODULE OF A PASSENGER VEHICLE
ÉLÉMENT PORTEUR POUR UN MODULE FRONTAL D'UN VÉHICULE AUTOMOBILE

(30) Priorität: 06.10.2006 DE 102006047419
(43) Veröffentlichungstag der Anmeldung: 17.06.2009
(73) Patentinhaber: Daimler AG, 70327 Stuttgart (DE)
(72) Erfinder: EPPLE, Jörg, 71229 Leonberg (DE); LOOTZE, Wolfgang, 72768 Reutlingen (DE); WIESLER, Klaus, 73666 Baltmannsweiler (DE)
(74) Vertreter: Moore, Derek
(86) Internationale Anmeldenummer: PCT/EP2007/006796
(87) Internationale Veröffentlichungsnummer: WO 2008/043402

(56) Entgegenhaltungen:
- EP-A1- 1 036 729
- EP-A1- 1 213 207
- DE-A1- 10 002 499
- DE-A1-102005 055 705

## Beschreibung

Die Erfindung betrifft ein Trägerteil für ein Frontendmodul eines Personenkraftwagens der im Oberbegriff des Patentanspruchs 1 angegebenen Art.

Aus der DE 100 02 499 A1 ist ein Trägerteil als bekannt zu entnehmen, bei der ein auch als Kühlerbrücke bezeichneter Querträger auf Höhe einer oberen Längsträgerebene an zugehörigen vorderen Enden der Längsträger festgelegt ist. Über zwei seitliche und ein mittleres Verbindungselement ist der Querträger der oberen Längsträgerebene mit einem Stoßfängerquerträger verbunden, an dessen Unterseite ein in Fahrzeugquerrichtung verlaufendes Querelement über weitere Verbindungselemente gehalten ist. Das Trägerteil ist dabei insgesamt aus einer Vielzahl von einzelnen Bauteilen zusammengesetzt, wobei der mittlere Stoßfängerquerträger eine zentrale Tragfunktion für das untere Querelement übernimmt. Dabei ist der mittlere Stoßfänger selbst mit den dahinter liegenden Längsträgern einer mittleren bzw. unteren Längsträgerebene verbunden.

Ein gattungsgemäßes Trägerteil für ein Frontmodul eines Personenkraftwagens geht aus der EP 1 213 207 A1 hervor.

Aufgabe der vorliegenden Erfindung ist es, ein Trägerteil für ein Frontendmodul eines Personenkraftwagens der eingangs genannten Art zu schaffen, welches bedeutend einfacher aufgebaut und leichter an den tragenden Bauteilen der Kraftwagenkarosserie befestigbar ist und das zudem eine besonders gute Verteilung der Zug-Druck Belastungen sicherstellt.

Diese Aufgabe wird erfindungsgemäß durch ein Trägerteil mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um einen weitaus einfacheren und kompakteren Aufbau des Trägerteils zu ermöglichen, ist es erfindungsgemäß vorgesehen, dass der Querträger der oberen Längsträgerebene, die Verbindungselemente und das Querelement zu einem einteiligen Trägerteil miteinander verbunden sind. Mit anderen Worten ist es erfindungsgemäß vorgesehen, ein einfach herstellbares Trägerteil zu schaffen, welches keines Zusammenbaus der Einzelelemente vor der Befestigung an den tragenden Bauteilen der Kraftwagenkarosserie bedarf. Da das unterhalb des Querträgers der oberen Längsträgerebene angeordnete Querelement über die Verbindungselemente an dem Querträger gehalten ist, kann darüber hinaus auf eine separate Befestigung des Querelements an tragenden Bauteilen der Kraftwagenkarosserie - beispielsweise an einem Integralträger bzw. einem Fahrschemel - verzichtet werden. Vielmehr ist das Querelement auf einfache Weise durch den Querträger der oberen Längsträgerebene mitgetragen, wobei ein zwischen dem Querträger der oberen Längsträgerebene und dem Querelement angeordneter Stoßfängerquerträger, welcher auf Höhe einer unteren bzw. mittleren Längsträgerebene angeordnet ist, separat und unmittelbar an der Vorbaustruktur des Kraftwagens abgestützt werden kann. Dies erfolgt insbesondere mittels den Längsträgern der mittleren bzw. unteren Längsträgerebene.

Insgesamt ist somit erkennbar, dass das Querelement unabhängig von dem mittleren Stoßfängerquerträger lediglich über den Querträger der oberen Längsträgerebene an Ort und Stelle zu halten ist. Der Querträger der oberen Längsträgerebene kann dabei mit dem Querelement sowie den Verbindungselementen ein rahmenförmiges Trägerteil bilden, an welchem die Verkleidung des Frontendmoduls großformatig abgestützt werden kann.

Ein weiterer Vorteil des erfindungsgemäßen Trägerteils ist es, dass mehrere Fußgängerschutzanforderungen über ein und dasselbe Bauteil erfüllt werden können. Dabei stellt das Querelement einen unteren Beinanprallbereich dar, der hinsichtlich der Steifigkeitsverhältnisse auf einen Aufprall eines Fußgängers im Bereich seines Unterschenkels (lower leg) angepasst werden kann. Der Querträger der oberen Längsträgerebene stellt hingegen einen oberen Beinanprallbereich des Trägerteils dar, der entsprechend so ausgelegt werden kann, dass die Fußgängerschutzanforderungen bei einem Aufprall des Fußgängers im Bereich seines Oberschenkels erfüllt werden können. Insgesamt umfasst das Trägerteil somit sowohl den unteren wie auch den oberen Beinanprallbereich, wobei der Querträger der oberen Längsträgerebene und das Querelement einfach aufeinander abzustimmen sind.

Weiterhin ist vorgesehen, dass der Querträger der oberen Längsträgerebene sowie die beiden Verbindungselemente mit den Verstärkungsteilen versehen sind. Somit ist insgesamt eine U-förmige Struktur geschaffen, über welche im Falle eines Frontalaufpralls des Kraftwagens die entstehenden Zug-Druck-Belastungen zwischen den beiden Längsträgerebenen der Vorbaustruktur besonders gut lastverteilend übertragen werden können. Dabei sind die Verstärkungsteile der beiden Verbindungselemente über jeweilige Verhakungsmittel im Wesentlichen formschlüssig mit dem Verstärkungsteil des Querträgers der oberen Längsträgerebene zu verbinden. Hierdurch wird eine besonders steife und zug- bzw. druckfeste Verbindung zwischen den jeweiligen Verstärkungsteilen erreicht.

In weiterer Ausgestaltung der Erfindung hat es sich darüber hinaus als vorteilhaft gezeigt, wenn das Trägerteil als Hybridbauteil aus Kunststoff ausgebildet ist, in welches Verstärkungsteile insbesondere aus einem Metallblech eingelegt sind. Durch die Verstärkungsteile können somit auf einfache Weise hoch belastete Bauteilbereiche des Trägerteils verstärkt werden, um beispielsweise die bei einem Frontalaufprall des Personenkraftwagens entstehenden Zug-Druck-Belastungen zwischen den beiden Längsträgerebenen der Vorbaustruktur übertragen bzw. vergleichmäßigen zu können. Durch die Einbettung bzw. Integration der Metallbleche in einen Kunststoff kann ein einfach herstellbares Trägerteil geschaffen werden, um eine kostengünstige Fertigung zu realisieren.

Als außerdem vorteilhaft hat es sich gezeigt, wenn die Verstärkungsteile der beiden Verbindungselemente und das Verstärkungsteil des Querträgers mit Aussparungen zur Durchdringung des Kunststoffs versehen sind. Hierdurch ist eine einfache Möglichkeit geschaffen, die Verstärkungsteile besonders zuverlässig mit dem Kunststoff zu verbinden.

Als außerdem vorteilhaft hat es sich gezeigt, wenn das untere Querelement als Beinabstützung ausgebildet ist, welche gegenüber dem Querträger der oberen Längsträgerebene in Fahrzeuglängsrichtung nach vorne übersteht. Hierdurch kann auf besonders vorteilhafte Weise der zuvor beschriebene untere Beinanprallbereich des Trägerteils geschaffen werden.

Als außerdem vorteilhaft hat es sich gezeigt, wenn der Querträger der oberen Längsträgerebene über zugeordnete seitliche Deformationselemente an zugehörigen tragenden Bauteilen der Kraftwagenkarosserie, insbesondere an Längsträgern der oberen Längsträgerebene abzustützen ist. Hierdurch kann im Falle eines Frontalaufpralls des Kraftwagens eine besonders lastverteilende Abstützung des Trägerteils an der dahinter liegenden Vorbaustruktur erreicht werden.

In weiterer Ausgestaltung der Erfindung ist zusätzlich ein oberhalb des Querträgers der oberen Längsträgerebene verlaufendes oberes Querelement vorgesehen, welches über weitere Verbindungselemente einteilig mit dem Querträger der oberen Längsträgerebene bzw. dem Querelement ausgebildet ist. Mit anderen Worten ist demzufolge ein einteiliges Trägerteil geschaffen, welches insgesamt drei in Fahrzeugquerrichtung verlaufende Elemente umfasst. Durch das obere Querelement kann dabei auf einfache Weise eine Festlegung des Trägerteils am Querträger der Fahrgastzelle unterhalb der Windschutzscheibe des Kraftwagens erzielt werden. Zwei der weiteren Verbindungselemente verlaufen dabei bevorzugterweise zwischen den äußeren Enden des Querträgers der oberen Längsträgerebene und des oberen Querelements, so dass diese eine seitliche Einfassung für die Scheinwerfer des Personenkraftwagens bilden. Darüber hinaus ist bevorzugterweise in einem mittleren Bereich zumindest ein Verbindungselement vorgesehen, über welches das obere Querelement und der Querträger der oberen Längsträgerebene versteifend miteinander verbunden sind.

Schließlich hat es sich als vorteilhaft gezeigt, wenn der Querträger der oberen Längsträgerebene und/oder des unteren Verbindungselements mit Energieabsorptionsmitteln, insbesondere mit Rippen, versehen sind. Hierdurch lässt sich insbesondere bei einer Kollision mit einem Fußgänger dessen Verletzungsrisiko erheblich minimieren.

Weitere Vorteile, Merkmale und Einzelheiten der Erfindung ergeben sich aus der nachfolgenden Beschreibung eines bevorzugten Ausführungsbeispiels sowie anhand der Zeichnungen; Diese zeigen in:
- Fig. 1: eine schematische Perspektivansicht auf ein Trägerteil für ein Frontendmodul eines Personenkraftwagens, welches vorliegend einen Querträger auf Höhe einer oberen Längsträgerebene umfasst, der über zwei seitliche Deformationselemente an zugeordneten Längsträgern abzustützen ist, wobei oberhalb und unterhalb des Querträgers der oberen Längsträgerebene jeweils ein Querelement vorgesehen ist, welche über jeweilige Verbindungselemente mit dem Querträger zu einem einteiligen Trägerteil verbunden sind, das vorliegend als Hybridbauteil aus Kunststoff mit Verstärkungsteilen gestaltet ist;
- Fig. 2: eine schematische Schnittansicht entlang einer in Fahrzeuglängsrichtung und vertikal verlaufenden Mittellängsachse der Vorbaustruktur des Personenkraftwagens, wobei die Anordnung des Trägerteils sowie dessen Abdeckung durch eine Frontklappe sowie eine Verkleidung des Frontendmoduls erkennbar wird;
- Fig. 3: eine ausschnittsweise vergrößerte Perspektivansicht des Details III in Fig. 1, wobei eine alternative Ausführungsform des Trägerteils dargestellt ist, bei welchem außenseitig des Längsträgers der oberen Längsträgerebene eine Mehrzahl von Deformationselementen vorgesehen sind;
- Fig. 4: eine schematische Rückansicht auf ein ausschnittsweise erkennbares Verstärkungsteil des Querträgers der oberen Längsträgerebene, welches über jeweilige Verhakungsmittel mit einem zugehörigen Verstärkungsteil eines unteren Verbindungselements verbunden ist;
- Fig. 5: eine schematische Schnittansicht durch die miteinander korrespondierenden Verhakungsmittel des Querträgers der oberen Längsträgerebene und des zugehörigen Verbindungselements entlang der Linie V-V in Fig. 4; und in
- Fig. 6: eine schematische Rückansicht auf das separat dargestellte Verstärkungsteil des unteren Verbindungselements gemäß Fig. 4.

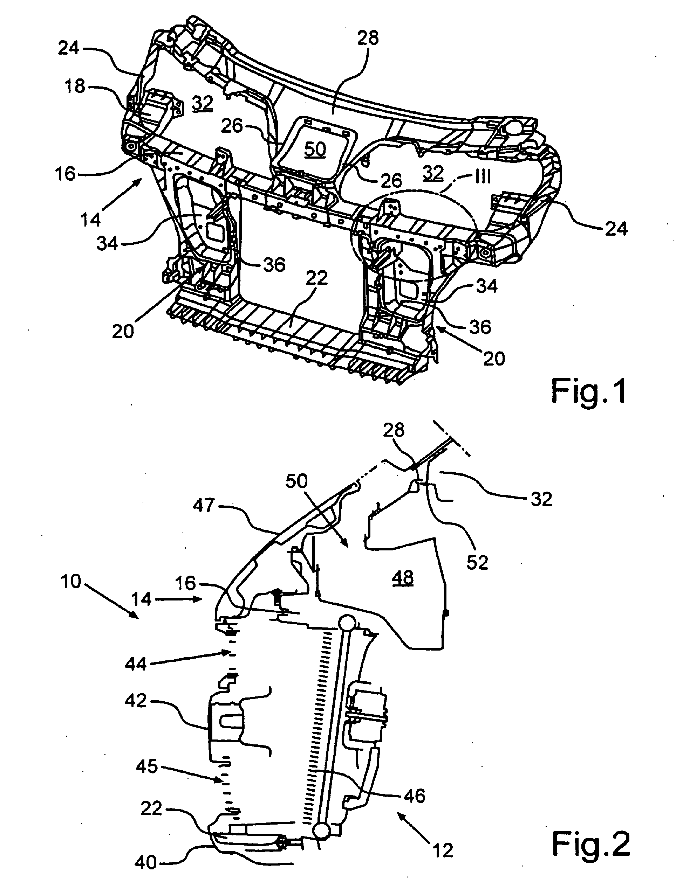

In Fig. 1 ist in einer schematischen Perspektivansicht ein Trägerteil für ein in Fig. 2 noch näher erläutertes Frontendmodul 10 dargestellt, welches auf im Weiteren noch näher erläuterte Weise an tragenden Bauteilen einer Vorbaustruktur 12 (Fig. 2) einer Kraftwagenkarosserie eines Personenkraftwagens festgelegt werden kann. Das Trägerteil umfasst im Wesentlichen einen auf Höhe einer oberen Längsträgerebene 14 verlaufenden Querträger 16, welcher an seinen seitlichen Enden unter Vermittlung eines jeweiligen Deformationselements 18 an zugehörigen vorderen Enden von nicht dargestellten oberen äußeren Längsträgern festlegbar ist. Nach unten hin schließen sich an den Querträger 16 der oberen Längsträgerebene 14 zwei untere Verbindungselemente 20 an, welche in Fahrzeughochrichtung im Wesentlichen vertikal verlaufen. Über die beiden Verbindungselemente 20 ist ein Querelement 22 getragen, welches sich im Wesentlichen horizontal in Fahrzeugquerrichtung erstreckt. Das Querelement 22 ist dabei im vorliegenden Ausführungsbeispiel als Beinabstützung bzw. als so genannter "lower stiffener" ausgebildet, auf dessen Höhe das Frontendmodul im Falle eines Frontalaufpralls mit einem Fußgänger im Bereich von dessen Unterschenkel auftrifft.

Weiterhin umfasst das Trägerteil zwei seitliche obere Verbindungselemente 24 sowie zwei mittlere obere Verbindungselemente 26, über welche der Querträger 16 auf Höhe der oberen Längsträgerebene 14 mit einem weiteren Querelement 28 verbunden ist, welches als Abdeckung eines in Fig. 2 erkennbaren Querträgers 30 unterhalb einer nicht erkennbaren Windschutzscheibe des Personenkraftwagens dient. Dabei ist das Trägerteil über das Querelement 28 an dem Querträger 30 festgelegt.

Der Querträger 16 sowie die beiden Querelemente 22, 28 sind über die jeweiligen Verbindungselemente 20, 26, 28 miteinander zu einem einteiligen Trägerteil verbunden. Dieses Trägerteil ist vorliegend als Hybridbauteil aus Kunststoff gestaltet, in welches auf im Weiteren noch näher beschriebene Weise Verstärkungsteile vorzugsweise aus einem Metallblech eingelegt sind. Als im Rahmen der Erfindung mit umfasst ist zu betrachten, dass die Verstärkungsteile auch aus anderen Materialien, insbesondere aus faserverstärkten Kunststoffen bestehen könnten. Das Hybridbauteil kann dabei beispielsweise dadurch erzeugt werden, dass die Verstärkungsteile in den Kunststoff eingegossen bzw. mit diesem umspritzt werden. Natürlich sind hier auch andere gängige Herstellungsverfahren denkbar, mit welchen ein einteiliges Trägerteil hergestellt werden kann.

Zwischen den mittleren Verbindungselementen 26 und den jeweiligen seitlichen Verbindungselementen 24 sind zwischen dem Querträger 16 und dem Querelement 28 zwei Öffnungen 32 gebildet, in welchen jeweilige Scheinwerfer des Personenkraftwagens einzusetzen sind. Im Bereich der beiden unteren Verbindungselemente 20 sind darüber hinaus zwei jeweilige Flansche 34 erkennbar, über welche das Trägerteil an nicht dargestellten vorderen Enden von zugehörigen Längsträgern einer mittleren bzw. unteren Längsträgerebene festgelegt werden können. Hierzu sind im Bereich der Flansche 34 jeweils drei Schrauböffnungen 36 erkennbar. An der Vorderseite der Flansche 34 sind nicht gezeigte Deformationselemente in Form von Crashboxen festlegbar, welche über einen lediglich in Fig. 2 erkennbaren Stoßfängerquerträger 38 miteinander verbunden sind. Insgesamt ist jedoch erkennbar, dass der Stoßfängerquerträger 38 keine Tragfunktion für das untere Querelement 22 hat.

In Zusammenschau mit Fig. 2, welche in einer schematischen Schnittansicht entlang einer vertikal und in Fahrzeuglängsrichtung verlaufenden Schnittebene die Vorbaustruktur 12 der Kraftwagenkarosserie zeigt, wird die wesentliche Positionierung der einzelnen Bauteile des Trägerteils deutlich. So ist zunächst im unteren Bereich des Kraftwagenbugs das untere Querelement 22 erkennbar, welches von einer Frontlippe 40 des Frontendmoduls 10 nach vorne hin verkleidet ist. Oberhalb des Querelements 22 ist der der nicht zum Trägerteil gehörende Stoßfängerquerträger 38 erkennbar, welcher durch eine Stoßfängerverkleidung 42 des Frontendmoduls 10 verkleidet ist. Sowohl oberhalb wie auch unterhalb der Stoßfängerverkleidung 42 sind jeweilige Gitterelemente 44, 45 erkennbar, über welche ein hinter dem Trägerteil liegender Kühler 46 für eine Brennkraftmaschine des Personenkraftwagens mit Frischluft zu versorgen ist. Oberhalb des oberen Gitterelements 44 schließt sich eine Fronthaube 47 an, welche auch den Querträger 16 der oberen Längsträgerebene 14 nach vorne hin abdeckt. Weiterhin ist erkennbar, dass das Frontendmodul 10 mit einem oberen Ende am Querträger 16 unter Zwischenanordnung eines vor dem Querträger 16 positionierten Kunststoffschaums festgelegt ist. Außerdem ist aus Fig. 2 ein Einlasskanal 48 einer Heizungs- und Klimaanlage erkennbar, welche über eine insbesondere in Fig. 2 erkennbare Luftöffnung 50 zwischen den beiden mittleren Verbindungselementen 26 mit Luft zu versorgen ist. Des Weiteren ist aus Fig. 2 erkennbar, dass das obere Querelement 28 auf einem Flansch 52 des Querträgers 30 aufliegt.

Darüber hinaus ist aus Fig. 2 insbesondere erkennbar, dass das untere Querelement 22 - in Fahrzeuglängsrichtung betrachtet - gegenüber dem Querträger 16 der oberen Längsträgerebene 14 sowie gegenüber dem Stoßfängerquerträger 38 nach vorne hin übersteht. Hierdurch wird gewährleistet, dass das Frontendmodul 10 beim Auftreffen auf einen Fußgänger zunächst dessen Unterschenkelbereich beaufschlagt.

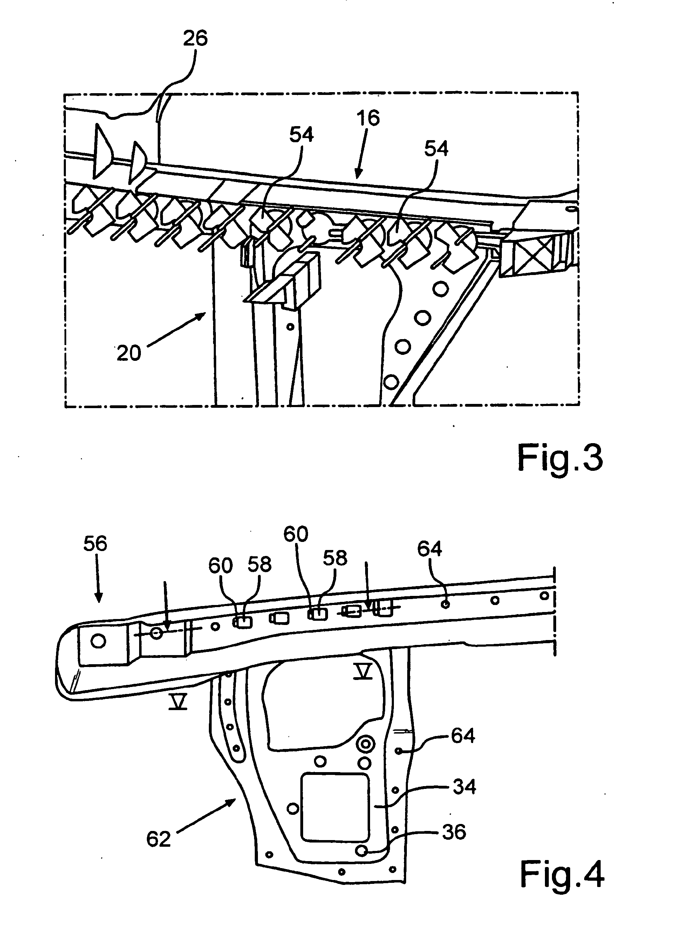

In Fig. 3 ist in einer ausschnittsweise vergrößerten Perspektivansicht das Detail III in Fig. 1 erkennbar, wobei eine alternative Ausführungsform des Trägerteils bzw. insbesondere des Querträgers 16 dargestellt ist. Dabei sind an der Vorderseite des Querträgers 16 eine Vielzahl von Energieabsorptionselementen 54 vorgesehen, durch welche ein Beinanprall im Bereich des Querträgers 16 abgemildert werden kann. Alternativ hierzu können auch nicht dargestellte Rippenpakete zur Energieabsorption vorgesehen werden. In Fig. 4 ist in einer schematischen Rückansicht ausschnittsweise ein Verstärkungsteil 56 des Querträgers 16 auf Höhe der oberen Längsträgerebene 14 dargestellt, welches vorliegend aus einem Metallblech hergestellt ist. Das Verstärkungsteil 56 ist über eine Vielzahl von im Weiteren noch näher erläuterten Verhakungsmitteln 58 mit jeweils korrespondierenden Verhakungsmitteln 60 eines weiteren Verstärkungsteils 62 des jeweils zugehörigen Verbindungselements 20 verbunden. Das in diesem Fall nicht dargestellte weitere Verstärkungsteil 60 des anderen Verbindungselements 20 ist im Wesentlichen formidentisch und spiegelsymmetrisch ausgebildet.

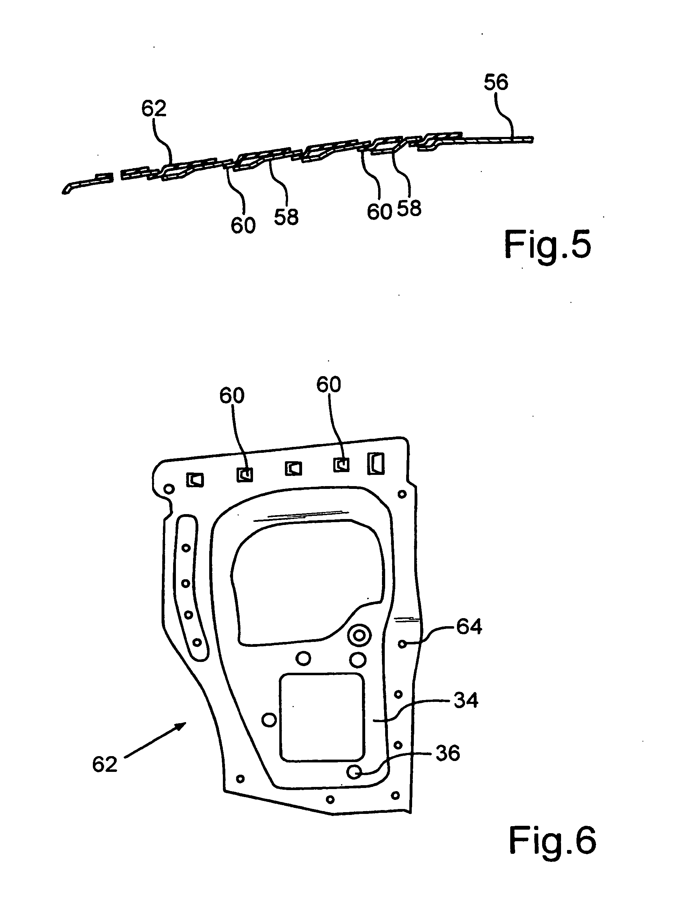

Das Zusammenwirken der Verhakungsmittel 58, 60 der beiden Verstärkungsteile 56, 62 ist insbesondere aus Fig. 5 erkennbar, welches eine horizontale Schnittansicht durch die Verstärkungsteile 56, 62 entlang der Linie V-V in Fig. 4 zeigt. Dabei wird insbesondere erkennbar, dass die Verhakungsmittel 60 des Verstärkungsteils 62 als Laschen ausgebildet sind, welche in die als entsprechend angepasste Aufnahmeöffnungen ausgebildeten Verhakungsmittel 58 des Verstärkungsteils 56 eingreifen. Es ergibt sich ein Formschluss zwischen den jeweiligen Verhakungsmitteln 58, 60, wobei das Verstärkungsteil 62 dadurch am Verstärkungsteil 56 festgelegt werden kann, dass dieses in Fahrzeugquerrichtung auf die jeweils eine bzw. andere Seite bewegt wird. Somit ergibt sich insgesamt eine U-förmige Anordnung der Verstärkungsteile 56, 62, welche sich innerhalb des Querträgers 16 bzw. der beiden sich nach unten hin anschließenden Verbindungselemente 20 erstrecken. Innerhalb der Verstärkungsteile 56, 62 sind darüber hinaus Aussparungen 64 vorgesehen, welche zur Durchdringung mit die Verstärkungsteile 56, 62 umgebendem Kunststoff vorgesehen sind.

In Fig. 6 ist das im Bereich des jeweiligen Verbindungselements 20 angeordnete Verstärkungsteil 60 nochmals separat in einer Rückansicht dargestellt.

Aus den Zeichnungen ist somit insgesamt erkennbar, dass bei dem Trägerteil die beiden Querelemente 22, 28 integral mit dem Querträger 16 verbunden sind, wodurch sich mehrere Funktionen zur Gewährleistung des Fußgängerschutzes realisieren bzw. aufeinander abstimmen lassen. Dabei dient das untere Querelement 22 als Beinabstützung, welche mit entsprechenden Rippen 66 versehen ist, so dass sich ein unter Beinanprallbereich ergibt, mit welchem das Frontendmodul 10 im Falle eines Frontalaufpralls mit einem Fußgänger auf dessen Unterschenkel auftrifft.

Durch den Querträger 16 auf Höhe der oberen Längsträgerebene 14 wird ein oberer Beinanprallbereich geschaffen, auf welchen der Fußgänger im Falle eines Frontalaufpralls des Personenkraftwagens mit seinem Oberschenkel auftrifft. Schließlich ist zwischen dem Querträger 16 und dem oberen Querelement 28 die Fronthaube 47 so ausgebildet bzw. durch das Trägerteil abgestützt, dass sich die Anforderungen hinsichtlich des Kopfaufpralls eines Fußgängers im Falle einer Frontalkollision des Kraftwagens erfüllen lassen. Zur Erfüllung dieser Erfordernisse sind sowohl das Querelement 28 und der Querträger 16 wie auch die Verbindungselemente 24, 26 mit entsprechenden Verrippungen oder Energieabsorbern versehen, um einen optimalen Schutz des Fußgängers zu gewährleisten. Da sowohl der obere und der untere Beinanprallbereich, als auch der Kopfaufprallbereich des Frontendmoduls 10 durch das einteilige Trägerteil bereitgestellt werden, sind dessen Bereiche besonders vorteilhaft aufeinander abzustimmen. Somit ist insgesamt nicht nur ein einfach herstellbares, sondern ein hinsichtlich des Fußgängerschutzes optimiertes Trägerteil geschaffen.

Schließlich ist insbesondere aus den Figuren 1 und 2 erkennbar, dass der vorliegende Personenkraftwagen eine Einvolumenform (one box) aufweist, welche lediglich einen kurzen Vorbau aufweist. Durch das Trägerteil können dabei die Erfordernisse hinsichtlich des Fußgängerschutzes in optimaler Weise erfüllt werden.

## Patentansprüche

1. Trägerteil für ein Frontendmodul (10) eines Personenkraftwagens, welches an tragenden Bauteilen der Kraftwagenkarosserie festzulegen ist und wenigstens einen Querträger (16) auf Höhe einer oberen Längsträgerebene (14) sowie ein unterhalb von diesem verlaufendes unteres Querelement (22) umfasst, welches über Verbindungselemente (20) gehalten ist, wobei der Querträger (16), die Verbindungselemente (20) und das Querelement (22) zu einem einteiligen Trägerteil miteinander verbunden sind, wobei der Querträger (16) auf Höhe der oberen Längsträgerebene (14) sowie die beiden Verbindungselemente (20) mit Verstärkungsteilen (56, 62) versehen sind, und **dadurch gekennzeichnet, dass** die Verstärkungselemente (62) der beiden Verbindungselemente (20) über jeweilige Verhakungsmittel (58, 60) im Wesentlichen formschlüssig mit dem Verstärkungsteil (56) des Querträgers (16) auf Höhe der oberen Längsträgerebene (14) zu verbinden sind.

2. Trägerteil nach Anspruch 1,
**dadurch gekennzeichnet,**
**dass** das Trägerteil als Hybridbauteil aus Kunststoff ausgebildet ist, in welches die Verstärkungsteile (56, 62) insbesondere aus einem Metallblech eingelegt sind.

3. Trägerteil nach einem der Ansprüche 1 oder 2,
**dadurch gekennzeichnet,**
**dass** die Verstärkungsteile (62) der beiden Verbindungselemente (20) und das Verstärkungsteil (56) des Querträgers (16) mit Aussparung (64) zur Durchdringung des Kunststoffs versehen sind

4. Trägerteil nach Anspruch 1,
**dadurch gekennzeichnet,**
**dass** das untere Querelement (22) als Beinabstützung ausgebildet ist, welche gegenüber dem Querträger (16) in Fahrzeuglängsrichtung nach vorne übersteht.

5. Trägerteil nach Anspruch 1,
**dadurch gekennzeichnet,**
**dass** der Querträger (16) über zugeordnete seitliche Deformationselemente (18) an zugeordneten tragenden Bauteilen der Kraftwagenkarosserie, insbesondere an Längsträgern der oberen Längsträgerebene, abzustützen ist.

6. Trägerteil nach Anspruch 1,
**dadurch gekennzeichnet,**
**dass** ein oberhalb des Querträgers (16) verlaufendes oberes Querelement (28) vorgesehen ist, welches über weitere Verbindungselemente (24, 26) einteilig mit dem Querträger (16) bzw. dem Querelement (22) ausgebildet ist.

7. Trägerteil nach Anspruch 6,
**dadurch gekennzeichnet,**
**dass** das obere Querelement (28) als Abdeckung eines Querträgers (32) unterhalb der Windschutzscheibe des Personenkraftwagens ausgebildet ist.

8. Trägerteil nach Anspruch 1,
**dadurch gekennzeichnet,**
**dass** der Querträger (16) und/oder das untere Verbindungselement (22) mit Energieabsorptionsmitteln, insbesondere mit Rippen (66), versehen sind.

## Claims

1. Support part for a front-end module (10) of a passenger car, which support module is to be located on load-bearing components of the motor vehicle body and comprises at least one crossmember (16) at the level of an upper side member plane (14) and a lower transverse element (22) extending below the former and held via connecting elements (20), wherein the crossmember (16), the connecting elements (20) and the transverse element (22) are joined to form a single-piece support part, wherein the crossmember (16) at the level of the upper side member plane (14) and the two connecting elements (20) are provided with reinforcing parts (56, 62), **characterised in that** the reinforcing parts (62) of the two connecting elements (20) can be joined via respective hooking means (58, 60) to the reinforcing part (56) of the crossmember (16) at the level of an upper side member plane (14) in a substantially positive manner.

2. Support part according to claim 1,
**characterised in that**
the support part is designed as a hybrid plastic component, into which the reinforcing parts (56, 62), which are in particular made of a sheet metal, are incorporated.

3. Support part according to claim 1 or 2,
**characterised in that**
the reinforcing parts (62) of the two connecting elements (20) and the reinforcing part (56) of the crossmember (16) are provided with holes (64) for the penetration of the plastic material.

4. Support part according to claim 1,
**characterised in that**
the lower transverse element (22) is designed as a leg support which projects in the forward direction relative to the crossmember (16) in the longitudinal direction of the vehicle.

5. Support part according to claim 1,
**characterised in that**
the crossmember (16) is to be supported, via associated lateral deformation elements (18), on associated load-bearing components of the motor vehicle body, in particular on side members of the upper side member plane.

6. Support part according to claim 1,
**characterised in that**
an upper transverse element (28) is provided, which extends above the crossmember (16) and which is designed in one piece with the crossmember (16) or the transverse element (22) via further connecting elements (24, 26).

7. Support part according to claim 6,
**characterised in that**
the upper transverse element (28) is designed as a cover of a crossmember (32) below the windscreen of the passenger car.

8. Support part according to claim 1,
**characterised in that**
the crossmember (16) and/or the lower connecting element (22) is/are provided with energy-absorbing means, in particular with ribs (66).

## Revendications

1. Élément porteur pour un module frontal (10) d'un véhicule automobile, ledit élément porteur doit être fixer aux composants porteurs de la carrosserie du véhicule automobile et au moins une entretoise transversale (16) à hauteur d'un plan de longeron supérieur (14) ainsi qu'un élément transversal inférieur (22) qui s'étend sous ce dernier et qui est maintenu par des éléments de liaison (20), l'entretoise transversale (16), les éléments de liaison (20) et l'élément transversal (22) étant reliés entre eux constituant ainsi un élément porteur d'un seul tenant, l'entretoise transversale (16) à hauteur du plan de longeron supérieur (14) ainsi que les deux éléments de liaison (20) sont pourvus d'éléments de renforcement (56, 62), et **caractérisé en ce que** les éléments de renforcement (62) des deux éléments de liaison (20) doivent être reliés essentiellement par forme à l'aide de moyen d'accrochage (58, 60) à l'élément de renforcement (56) de l'entretoise transversale (16) à hauteur du plan de longeron supérieur (14).

2. Élément porteur selon la revendication 1, **caractérisé en ce que** l'élément porteur est conçu comme un composant hybride en matière plastique, dans lequel s'insèrent les éléments de renforcement (56, 62) fabriqués notamment en tôle métallique.

3. Élément porteur selon l'une quelconque des revendications 1 ou 2, **caractérisé en ce que** les éléments de renforcement (62) des deux éléments de liaison (20) et l'élément de renforcement (56) de l'entretoise transversale (16) sont pourvus d'évidement (64) pour la pénétration du plastique.

4. Élément porteur selon la revendication 1, **caractérisé en ce que** l'élément transversal inférieur (22) est conçu comme repose-pied qui par rapport à l'entretoise transversale (16) dépasse vers l'avant dans le sens longitudinal du véhicule.

5. Élément porteur selon la revendication 1, **caractérisé en ce que** l'entretoise transversale (16) doit reposer sur les composants porteurs associés de la carrosserie du véhicule automobile, en particulier sur les longerons du plan de longeron supérieur, au moyen d'éléments de déformation (18) latéraux associés.

6. Élément porteur selon la revendication 1, **caractérisé en ce qu'**il est prévu un élément transversal (28) supérieur s'étendant au dessus de l'entretoise transversale (16), lequel est conçu d'un seul tenant avec l'entretoise transversale (16) ou l'élément transversal (22) au moyen d'autres éléments de liaison (24, 26).

7. Élément porteur selon la revendication 6, **caractérisé en ce que** l'élément transversal (28) supérieur est conçu comme un revêtement d'une entretoise transversale (32) sous le pare-brise du véhicule automobile.

8. Élément porteur selon la revendication 1, **caractérisé en ce que** l'entretoise transversale (16) et / ou l'élément de liaison (22) inférieur est/sont pourvu(s) de moyens d'absorption d'énergie, en particulier de nervures (66).
